# EUROPEAN PATENT APPLICATION

(11) **EP 3 081 327 A1**
(43) Date of publication of application: **19.10.2016**
(21) Application number: 16164851.4
(22) Date of filing: 12.04.2016
(51) Int. Cl.: B23K 35/30, B23K 35/36, B23K 35/368, B23K 35/02, C22C 38/00, C22C 38/04, C22C 38/06, C22C 38/08, C22C 38/14, C22C 38/32

(54) **FLUX-CORED WIRE FOR GAS-SHIELDED ARC WELDING**

(30) Priority: 15.04.2015 JP 2015083274
(71) Applicant: Nippon Steel & Sumikin Welding Co., Ltd., Tokyo 135-0016 (JP)
(72) Inventor: KAYAMORI, YUKI, Tokyo, 135-0016 (JP); TAKAYAMA, RIKIYA, Tokyo, 135-0016 (JP); NAGASHIMA, SHUSHIRO, Tokyo, 135-0016 (JP); CHIBA, RYUTARO, Tokyo, 135-0016 (JP)
(74) Representative: Klingseisen, Franz

(57) **Abstract**

A wire includes, in mass% with respect to the total mass of the wire, in the total of a flux and a steel sheath, 0.04 to 0.12% of C, 0.3 to 0.8% of Si, 1.5 to 3.0% of Mn, 0.2 to 1% of Ni, 0.8 to 1.4% of Al in terms of Al₂O₃ and Al₂O₃ in total and 0.3 to 0.6% of Al, and 0.004 to 0.012% of B, and further includes, in the flux, 5.0 to 7.0% of Ti oxide in terms of TiO₂, 0.2 to 0.6% of Si oxide in terms of SiO₂, 0.4 to 0.7% of Zr oxide in terms of ZrO₂, 0.1 to 0.5% of Mg, 0. 02 to 0.1% of Na compound in terms of Na₂O, and 0.04 to 0.1% of K compound in terms of K₂O.

## Description

### BACKGROUND

### Technical Field

The present invention relates to a flux-cored wire for gas-shielded arc welding, used when a welding structure such as soft steel, 490 N/mm² grade high tensile steel, or steel for a low temperature is manufactured, and relates to a flux-cored wire for gas-shielded arc welding, having excellent welding workability in all-position welding, excellent welding workability particularly in vertical upward welding, and excellent toughness of a weld metal up to about -30°C.

### Related Art

In a structure field of a ship or a bridge, a rutile type flux-cored wire for all-position welding (hereinafter, referred to as flux-cored wire) is often used. However, it is a problem whether excellent welding workability is obtained particularly in vertical upward welding in automatic welding. In vertical upward welding, a bead is formed while a molten pool is moved upward, and therefore a phenomenon in which a molten slag or a molten metal sags downward from the molten pool (hereinafter, referred to as metal-sagging) occurs easily, and furthermore a bead shape (smoothness on a surface of the bead or adaptability to a bead toe or a base material) is poor due to this metal-sagging disadvantageously.

In vertical upward welding, examples of an electric trip include a straight technique to go straight upward in a groove of a steel plate and a weave technique to go upward while a target position on a tip of a wire is distributed into right and left sides. The weave technique is an effective electric trip when a relatively large bead width is necessary, for example in in-groove welding of a thick plate or fillet welding between steel plates with a large gap. On the other hand, in a case of welding of a thin steel plate requiring a relatively small bead width, vertical upward welding in the straight technique is more effective. In the straight technique, a relatively small molten pool is formed just under an arc, and the molten pool sways and is circulated by an arc force. Therefore, in the straight technique, a molten metal spills out on a front side of a welding worker, and metal-sagging occurs easily.

A welding worker performs welding so as to prevent metal-sagging while watching a shape of a molten pool and a solidification start line of a molten metal through a shading mask, but skill of the welding worker is necessary in both the electric trips. Therefore, a welding site still strongly requests development of a flux-cored wire having particularly excellent vertical upward welding performance in the weave technique and the straight technique and at the same time having excellent welding workability also in another welding position, in order to reduce the number of adjustment step and improve quality of a welding part.

Welding of a marine structure or the like strongly demands a flux-cored wire capable of obtaining a weld metal having stable toughness even in a low temperature environment of about -30°C and having excellent welding workability in vertical upward welding.

As the flux-cored wire capable of obtaining a weld metal having excellent low temperature toughness, for example, JP 9-262693 A proposes a flux-cored wire having excellent welding workability in vertical upward welding and welding in an overhead position and having excellent low temperature toughness by optimizing a content of T, K, Mg, or the like. However, the technology disclosed in JP 9-262693 A does not examine an effect of ZrO₂, F, or the like at all, and therefore consideration of welding workability such as generation of spatter in vertical downward welding or horizontal fillet welding, a bead shape, or appearance is not sufficient disadvantageously. JP 2005-319508 A proposes a flux-cored wire having excellent welding workability in vertical upward welding, vertical downward welding, and horizontal fillet welding and having excellent toughness at about -20°C by optimizing a content of FeO, ZrO₂, or Al₂O₃. However, the technology disclosed in JP 2005-319508 A cannot obtain excellent toughness up to about -30°C disadvantageously.

### SUMMARY

Therefore, the present invention has been accomplished in view of the above problems. An object thereof is to provide a flux-cored wire for gas-shielded arc welding, having excellent welding workability in all-position welding, having excellent welding workability particularly in vertical upward welding in the weave technique and the straight technique, and capable of obtaining a weld metal having excellent toughness of a weld metal even in a low temperature environment up to about -30°C.

The present inventors manufactured trial flux-cored wires having different component compositions, and examined in detail welding workability in all-position welding, particularly welding workability in vertical upward welding, and toughness of a weld metal at about -30°C.

As a result, in order to prevent metal-sagging which is a problem in vertical upward welding in the weave technique or the straight technique, the present inventors have found that it is possible to make a viscosity and a freezing point of molten slag in a molten pool proper and to prevent metal-sagging in vertical upward welding by making amounts of a Ti oxide in terms of TiO₂, an Si oxide in terms of SiO₂, and a Zr oxide in terms of ZrO₂, a total amount of Al in terms of Al₂O₃ and Al₂O₃, and an amount of Mg in a flux-cored wire proper.

In addition, in order to improve welding performance in another position, the present inventors have found that it is possible to stabilize an arc in welding and improve adaptability to a welding bead toe by making amounts of a Zr oxide in terms of ZrO₂, an Na compound in terms of Na₂O, and a potassium compound in terms of K₂O in a flux-cored wire proper, and to obtain excellent slag removability by making an amount of Bi proper.

In addition, in order to improve toughness of a weld metal at about -30°C while securing strength thereof, the present inventors have found that it is most effective to make amounts of C, Si, Mn, and Mg in a flux-cored wire proper and to add proper amounts of Ni and B.

That is, a gist of the present invention is characterized by a flux-cored wire for gas-shielded arc welding having a steel sheath filled with a flux, including, in mass% with respect to the total mass of the wire, in the total of the flux and the steel sheath, 0.04 to 0.12% of C, 0.3 to 0.8% of Si, 1.5 to 3.0% of Mn, 0.2 to 1% of Ni, 0.3 to 0.6% of Al, 0.8 to 1.4% of Al in terms of Al₂O₃ and Al₂O₃ in total, and 0.004 to 0.012% of B, and further including, in mass% with respect to the total mass of the wire, in the flux, 5.0 to 7.0% of Ti oxide in terms of TiO₂ in total, 0.2 to 0.6% of Si oxide in terms of SiO₂ in total, 0.4 to 0.7% of Zr oxide in terms of ZrO₂ in total, 0.1 to 0.5% of Mg, 0.02 to 0.1% of Na compound in terms of Na₂O in total, and 0.04 to 0.1% of K compound in terms of K₂O in total, the balance being Fe in the steel sheath, Fe in iron powder and iron alloy powder, and inevitable impurities.

Furthermore, the gist of the present invention is characterized by a flux-cored wire for gas-shielded arc welding, further including 0.03% or less of Bi in the flux in addition to the above components.

In the flux-cored wire for gas-shielded arc welding having the above structure according to the present invention, welding workability in all-position welding is excellent, welding workability is excellent particularly in vertical upward welding in the weave technique and the straight technique, and a weld metal having excellent toughness up to about -30°C can be obtained. Therefore, the present invention makes it possible to enhance an efficiency of welding and improve quality of a welding part.

### DETAILED DESCRIPTION

Hereinafter, component compositions of a flux-cored wire for gas-shielded arc welding according to the present invention, contents thereof, and a reason for limiting the component compositions will be described. The content of each component composition will be represented by mass% with respect to the total mass of the wire, and the mass% will be represented only by %.

### [0.04 to 0.12% of C in total of flux and steel sheath]

C is added in order to secure necessary strength of a weld metal. When the content of C is less than 0.04%, the effect cannot be obtained and the necessary strength of the weld metal cannot be obtained. On the other hand, when the content of C is more than 0.12%, a large amount of C stays in the weld metal, and the strength of the weld metal is excessively high. Therefore, the content of C is set to 0.04 to 0.12% in the total of a flux and a steel sheath. C is included in the steel sheath, and is added from iron powder and alloy powder in the flux.

### [0.3 to 0.8% of Si in total of flux and steel sheath]

Si acts as a deoxidizer, and improves low temperature toughness of a weld metal. When the content of Si is less than 0.3%, the effect cannot be obtained, deoxidization is insufficient, and the low temperature toughness of the weld metal is reduced. On the other hand, when the content of Si is more than 0.8%, Si stays in the weld metal excessively, and the low temperature toughness of the weld metal is reduced. Therefore, the content of Si is set to 0.3 to 0.8% in the total of the flux and the steel sheath. Si is included in the steel sheath, and is added from alloy powder such as Fe-Si or Fe-Si-Mn in the flux.

### [1.5 to 3.0% of Mn in total of flux and steel sheath]

Mn acts as a deoxidizer, and improves a mechanical property of a weld metal by staying in the weld metal. When the content of Mn is less than 1.5%, deoxidization is insufficient, and the low temperature toughness of the weld metal is reduced. On the other hand, when the content of Mn is more than 3.0%, Mn stays in the weld metal excessively, and the strength of the weld metal is excessively high. Therefore, the content of Mn is set to 1.5 to 3.0% in the total of the flux and the steel sheath. Mn is included in the steel sheath, and is added from metal Mn and alloy powder such as Fe- Mn or Fe-Si-Mn in the flux.

### [0.2 to 1% of Ni in total of flux and steel sheath]

Ni lowers a transition temperature of a weld metal, and particularly improves low temperature toughness of the weld metal. When the content of Ni is less than 0.2%, the effect cannot be obtained, and the low temperature toughness of the weld metal is reduced. On the other hand, when the content of Ni is more than 1%, the strength of the weld metal is excessively high. Therefore, the content of Ni is set to 0.2 to 1% in the total of the flux and the steel sheath. Ni is added from metal Ni and alloy powder such as Fe- Ni in the flux.

### [0.8 to 1.4% of Al in terms of Al₂O₃ and Al₂O₃ in total and 0.3 to 0.6% of Al in total of flux and steel sheath]

Al and Al₂O₃ adjust viscosity and a freezing point of molten slag as Al₂O₃ in a molten pool, and make a bead shape and appearance in vertical upward welding excellent. When the total content of A1 in terms of Al₂O₃ and Al₂O₃ is less than 0.8%, the bead shape and appearance in vertical upward welding in the weave technique or the straight technique are poor. On the other hand, when the total content of Al in terms of Al₂O₃ and Al₂O₃ is more than 1.4%, a generation amount of spatter is increased in all-position welding. Therefore, the total content of Al in terms of Al₂O₃ and Al₂O₃ is set to 0.8 to 1.4% in the total of the flux and the steel sheath.

Al has high deoxidizing power as an effect of an Al single substance and incorporates oxygen more rapidly than another deoxidizer such as Si or Mn, and therefore reduces oxygen in a weld metal and improves low temperature toughness. When the content of Al is less than 0.3%, the effect cannot be obtained, and the low temperature toughness of the weld metal is reduced. On the other hand, when the content of Al is more than 0.6%, the strength of the weld metal is excessively high. Therefore, the content of Al is set to 0.3 to 0.6% in the total of the flux and the steel sheath. Al is included in the steel sheath, and is added from metal Al, Fe- Al, or Al-Mg in the flux. Al₂O₃ is added from alumina or the like in the flux.

### [0.004 to 0.012% of B in flux]

B improves low temperature toughness of a weld metal by an effect for refining a microstructure of the weld metal. When the content of B is less than 0.004%, the effect cannot be obtained, and the low temperature toughness of the weld metal is reduced. On the other hand, when the content of B is more than 0.012%, high temperature cracking occurs easily. Therefore, the content of B is set to 0.004 to 0.012% in the flux. B is added from metal B and alloy powder such as Fe-Mn-B or Fe-B in the flux.

### [5.0 to 7.0% of Ti oxide in terms of TiO₂ in total in flux]

A Ti oxide forms slag on a surface of a bead and makes a bead shape and appearance excellent. When the content of a Ti oxide in terms of TiO₂ in total is less than 5.0%, the viscosity of molten slag is insufficient, metal-sagging occurs easily in vertical upward welding, the bead has a protruded shape, adaptability to a bead toe is poor, and the bead shape and appearance are poor. In addition, a generation amount of slag is insufficient, and resistance to metal-sagging or slag removability is poor in vertical downward welding. On the other hand, when the content of a Ti oxide in terms of TiO₂ in total is more than 7.0%, the generation amount of slag is excessively large, and a welding defect such as slag inclusion occurs easily in horizontal fillet welding or vertical downward welding. Therefore, the content of a Ti oxide in terms of TiO₂ in total is set to 5.0 to 7.0% in the flux. The Ti oxide is added from rutile, titanium oxide, titanium slag, ilmenite, or the like in the flux.

### [0.2 to 0.6% of Si oxide in terms of SiO₂ in total in flux]

An Si oxide adjusts viscosity and a melting point of molten slag in a molten pool, and makes slag encapsulation excellent. When the content of an Si oxide in terms of SiO₂ in total is less than 0.2%, molten slag is insufficient, the slag encapsulation and slag removability are poor in all-position welding, and the bead shape and appearance are poor. On the other hand, when the content of an Si oxide in terms of SiO₂ in total is more than 0.6%, molten slag is solidified slowly, and metal-sagging occurs easily in vertical upward welding or vertical downward welding. The basicity of molten slag is reduced, an amount of oxygen in a weld metal is increased, and therefore the low temperature toughness of the weld metal is reduced. Therefore, the content of an Si oxide in terms of SiO₂ in total is set to 0.2 to 0.6% in the flux. The Si oxide is added from silica sand, zircon sand, sodium silicate, or the like in the flux.

### [0.4 to 0.7% of Zr oxide in terms of ZrO₂ in total in flux]

A Zr oxide makes resistance to metal-sagging excellent in vertical upward welding or vertical downward welding in the weave technique, and makes a bead shape and appearance excellent in horizontal fillet welding. When the content of a Zr oxide in terms of ZrO₂ in total is less than 0.4%, the effect cannot be obtained and metal-sagging occurs easily in vertical upward welding or vertical downward welding in the weave technique. In addition, the bead shape and appearance are poor in horizontal fillet welding. On the other hand, when the content of a Zr oxide in terms of ZrO₂ in total is more than 0.7%, slag removability is poor in all-position welding. Therefore, the content of a Zr oxide in terms of ZrO₂ in total is set to 0.4 to 0.7% in the flux. The Zr oxide is added from zircon sand, zirconium oxide, or the like in the flux, and a small amount of Zr oxide is included in a Ti oxide.

### [0.1 to 0.5% of Mg in flux]

Mg acts as a strong deoxidizer, reduces an amount of oxygen in a weld metal, and improves low temperature toughness of the weld metal. When the content of Mg is less than 0.1%, the effect cannot be obtained, and the low temperature toughness of the weld metal is reduced. On the other hand, when the content of Mg is more than 0.5%, MgO as a deoxidation product is generated excessively in molten slag, and metal-sagging occurs easily in vertical upward welding. In addition, an arc is rough in all-position welding, and a generation amount of spatter is increased. Therefore, the content of Mg is set to 0.1 to 0.5% in the flux. Mg is added from metal Mg or alloy powder such as Al-Mg in the flux.

### [0.02 to 0.1% of Na compound in terms of Na₂O in total in flux]

An Na compound acts as an arc stabilizer and a slag-forming agent. When the content of the Na compound in terms of Na₂O in total is less than 0.02%, concentration of an arc is low and the arc is unstable in all-position welding, and a generation amount of spatter is increased. On the other hand, when the content of the Na compound in terms of Na₂O in total is more than 0.1%, the arc is concentrated excessively, the arc itself is thin, and metal-sagging occurs easily in vertical upward welding. Therefore, the content of the Na compound in terms of Na₂O in total is set to 0.02 to 0.1% in the flux. The Na compound is added from a solid component of water glass made from sodium silicate, and powder of sodium fluoride, cryolite, sodium titanate, or the like in the flux.

### [0.04 to 0.1% of K compound in terms of K₂O in total in flux]

A K compound acts as an arc stabilizer and a slag-forming agent like the Na compound. When the content of the K compound in terms of K₂O in total is less than 0.04%, an arc is unstable in all-position welding, and a generation amount of spatter is increased. On the other hand, when the content of the K compound in terms of K₂O in total is more than 0.1%, the slag encapsulation and slag removability are poor in all-position welding, and the bead shape and appearance are poor. Therefore, the K compound in terms of K₂O in total is set to 0.04 to 0.1% in the flux. The K compound is added from a solid component of water glass made from potassium silicate, and powder of potassium feldspar, potassium fluorosilicate, potassium titanate, or the like in the flux.

### [0.03% or less of Bi in flux]

Bi such as metal Bi improves slag removability, but causes high temperature cracking in a weld metal. Therefore, the content of Bi is set to 0.03% or less in the flux. 0.005% or more of Bi is preferably added in order to obtain an effect of slag removability.

The balance of the flux-cored wire of the present invention includes Fe in the steel sheath, iron powder added in order to adjust components, Fe of iron alloy powder such as an Fe-Mn, Fe-Si, Fe-Si-Mn, Fe-Ni, Fe-Al, or Fe-B alloy, and inevitable impurities. The inevitable impurities are not particularly specified, but the content of P or Si is preferably 0.010% or less from a viewpoint of resistance to high temperature cracking.

The flux-cored wire of the present invention is manufactured by filling a sheath of soft steel or alloy steel having excellent wire drawability after flux filling with about 10 to 20% of flux with respect to the total mass of the wire and then reducing the diameter of the wire to a predetermined wire diameter (1.0 to 1.6 mm) by die wire drawing or rolling.

The cross-sectional form of the flux-cored wire is not particularly limited. However, a seamless flux-cored wire having no through-gap in a steel sheath has excellent hygroscopicity resistance and can reduce a hydrogen amount in the wire, and therefore is advantageous to preventing low temperature cracking.

CO₂ gas is generally used as a shielding gas for welding, but mixed gas such as Ar-CO₂ may be used.

### Examples

Hereinafter, the effect of the present invention will be described in more detail by Examples.

A steel sheath of JIS Z G3141 SPHC (C: 0.02%, Si: 0.01%, Mn : 0,40%, P: 0.02%, S: 0.01%, Al: 0.03%) was filled with various fluxes at a flux filling ratio of 15%. Thereafter, various trial seamless flux-cored wires having wire component compositions listed in Table 1 and having a wire diameter reduced to 1.2 mm were manufactured.

**[Table 1]**

| section | wire symbol | component of flux-cored wire (mass% with respect to total mass of wire) | | | | | | | | | | | | | | | |
|---|---|---|---|---|---|---|---|---|---|---|---|---|---|---|---|---|---|
| | | C | Si | Mn | Ni | (a) Al in terms of Al₂O₃ | (b) Al₂O₃ | (a)+(b) | Al | Bi | TiO₂ | SiO₂ | ZrO₂ | Mg | Na₂O | K₂O | B |
| Example of present invention | W1 | 0.04 | 0.50 | 1.78 | 0.22 | 0.85 | 0.25 | 1.10 | 0.45 | 0.023 | 6.83 | 0.22 | 0.48 | 0.15 | 0.023 | 0.070 | 0.005 |
| | W2 | 0.07 | 0.78 | 1.63 | 0.27 | 0.66 | 0.15 | 0.81 | 0.35 | 0.029 | 5.13 | 0.30 | 0.42 | 0.30 | 0.030 | 0.051 | 0.005 |
| | W3 | 0.06 | 0.33 | 1.85 | 0.80 | 0.72 | 0.63 | 1.35 | 0.38 | - | 6.98 | 0.34 | 0.68 | 0.15 | 0.042 | 0.063 | 0.007 |
| | W4 | 0.10 | 0.45 | 1.53 | 0.22 | 1.08 | 0.30 | 1.38 | 0.57 | 0.022 | 5.11 | 0.49 | 0.62 | 0.20 | 0.096 | 0.057 | 0.007 |
| | W5 | 0.10 | 0.55 | 2.56 | 0.97 | 0.77 | - | 0.77 | 0.41 | - | 6.96 | 0.54 | 0.66 | 0.45 | 0.090 | 0.043 | 0.011 |
| | W6 | 0.12 | 0.73 | 2.96 | 0.96 | 0.60 | 0.45 | 1.05 | 0.32 | - | 5.85 | 0.57 | 0.55 | 0.11 | 0.053 | 0.061 | 0.004 |
| | W7 | 0.09 | 0.63 | 2.91 | 0.71 | 0.62 | 0.36 | 0.98 | 0.33 | 0.025 | 6.22 | 0.40 | 0.51 | 0.30 | 0.031 | 0.098 | 0.012 |
| | W8 | 0.05 | 0.41 | 2.24 | 0.31 | 0.89 | 0.24 | 11.3 | 0.47 | 0.022 | 5.86 | 0.42 | 0.55 | 0.32 | 0.044 | 0.086 | 0.007 |
| | W9 | 0.05 | 0.32 | 2.03 | 0.53 | 1.08 | - | 1.08 | 0.57 | - | 6.71 | 0.35 | 0.63 | 0.47 | 0.056 | 0.084 | 0.004 |
| Comparative Example | W10 | 0.03 | 0.87 | 2.55 | 0.79 | 0.72 | 0.36 | 1.08 | 0.38 | 0.016 | 6.96 | 0.14 | 0.62 | 0.15 | 0.037 | 0.072 | 0.009 |
| | W11 | 0.13 | 0.50 | 1.43 | 0.32 | 1.04 | 0.41 | 1.45 | 0.55 | - | 6.79 | 0.40 | 0.50 | 0.35 | 0.026 | 0.097 | 0.006 |
| | W12 | 0.08 | 0.23 | 1.48 | 0.21 | 0.76 | 0.56 | 1.32 | 0.40 | 0.038 | 4.87 | 0.36 | 0.67 | 0.12 | 0.085 | 0.043 | 0.008 |
| | W13 | 0.06 | 0.80 | 3.11 | 0.46 | 0.45 | 0.28 | 0.73 | 0.24 | - | 7.15 | 0.42 | 0.60 | 0.20 | 0.079 | 0.080 | 0.007 |
| | W14 | 0.06 | 0.60 | 2.73 | 0.60 | 1.25 | - | 1.25 | 0.66 | 0.026 | 6.81 | 0.33 | 0.33 | 0.04 | 0.091 | 0.033 | 0.007 |
| | W15 | 0.08 | 0.45 | 2.80 | 0.13 | 0.85 | 0.15 | 1.00 | 0.45 | - | 5.32 | 0.47 | 0.64 | 0.58 | 0.087 | 0.107 | 0.012 |
| | W16 | 0.07 | 0.65 | 1.65 | 0.11 | 1.11 | - | 1.11 | 0.59 | - | 5.56 | 0.71 | 0.40 | 0.30 | 0.014 | 0.077 | 0.015 |
| | W17 | 0.09 | 0.78 | 2.03 | 0.35 | 0.57 | 0.33 | 0.90 | 0.30 | 0.017 | 5.23 | 0.34 | 0.79 | 0.35 | 0.111 | 0.051 | 0.002 |

By using these trial wires, welding workability and weld metal performance were examined in vertical upward welding, vertical downward welding, or horizontal fillet welding in the straight technique or the weave technique.

In evaluation of the welding workability, a T-shaped fillet test body of JIS G3106 SM490B steel having a thickness of 16 mm was subjected to vertical upward welding, vertical downward welding, and horizontal fillet welding in the straight technique and the weave technique in semi-automatic welding under welding conditions in the positions listed in Table 2, and an arc state, a generation amount of spatter, the quality of slag removability or slag encapsulation, occurrence of metal-sagging, and the quality of a bead shape were examined visually. In addition, the fracture surface was observed in conformity to JIS Z3181, and presence of a welding defect such as slag inclusion was examined.

**[Table 2]**

| welding method | welding position | welding current (A) | | arc voltage (V) | welding rate (cm/min) | shielding gas |
|---|---|---|---|---|---|---|
| semi-automatic | vertical upward welding straight technique | 250 to 270 | | 28 to 31 | 10 to 15 | CO₂ gas 25 l/min |
| | vertical upward welding weave technique | 250 to 270 | | 28 to 31 | 6 to 10 | |
| | vertical downward welding | 260 to 280 | | 29 to 31 | 50 to 80 | |
| | horizontal fillet welding | 260 to 280 | | 29 to 31 | 30 to 50 | |
| | weld joint welding | first layer pass | 220 | 24 | 15 | |
| | | second to sixth pass | 250 to 280 | 27 to 29 | 16 to 25 | |

In evaluation of the weld metal performance, a ceramic backing material was attached to a test body obtained by incorporating ClASS NK KD36 steel having a thickness of 20 mm at a groove angle of 40° and a root gap of 5 mm, and a weld joint test was performed in a backward semi-automatic manner under welding conditions listed in Table 2. A tensile test piece (JIS Z2201 A0) and a charpy impact test piece (JIS Z2202 4) were collected from a thickness central part of a weld metal. In the tensile test, a test piece having a tensile strength of 490 to 670 MPa was evaluated to be acceptable. In the charpy impact test, a test piece having an average value of three absorption energies of 47 J or more at a test temperature of -30°C was evaluated to be acceptable. At this time, the presence of high temperature cracking was examined during welding of a first layer pass. These results are listed in Tables 3 and 4 collectively.

**[Table 3]**

| section | wire symbol | welding workability | | | | | | | | | | | |
|---|---|---|---|---|---|---|---|---|---|---|---|---|---|
| | | arc stability | generation amount of spatter | vertical upward | | | | | | | | | |
| | | | | straight | | technique | | | weave technique | | | | |
| | | | | slag removability | slag encapsulation | occurrence of metal-sagging | bead shape and appearance | presence of welding defect | slag removability | slag encapsulation | occurrence of metal-sagging | bead shape and appearance | presence of welding defect |
| Example of present invention | W1 | stable | small | excellent | excellent | not observed | excellent | not observed | excellent | excellent | not observed | excellent | not observed |
| | W2 | stable | small | excellent | excellent | not observed | excellent | not observed | excellent | excellent | not observed | excellent | not observed |
| | W3 | stable | small | excellent | excellent | not observed | excellent | not observed | excellent | excellent | not observed | excellent | not observed |
| | W4 | stable | small | excellent | excellent | not observed | excellent | not observed | excellent | excellent | not observed | excellent | not observed |
| | W5 | stable | small | excellent | excellent | not observed | excellent | not observed | excellent | excellent | not observed | excellent | not observed |
| | W6 | stable | small | excellent | excellent | not observed | excellent | not observed | excellent | excellent | not observed | excellent | not observed |
| | W7 | stable | small | excellent | excellent | not observed | excellent | not observed | excellent | excellent | not observed | excellent | not observed |
| | W8 | stable | small | excellent | excellent | not observed | excellent | not observed | excellent | excellent | not observed | excellent | not observed |
| | W9 | stable | small | excellent | excellent | not observed | excellent | not observed | excellent | excellent | not observed | excellent | not observed |
| Comparative Example | W10 | stable | small | poor | poor | not observed | poor | not observed | poor | poor | not observed | poor | not observed |
| | W11 | stable | large | excellent | excellent | not observed | excellent | not observed | excellent | excellent | not observed | excellent | not observed |
| | W12 | stable | small | excellent | excellent | observed | poor | not observed | excellent | excellent | observed | poor | not observed |
| | W13 | stable | small | excellent | excellent | not observed | poor | not observed | excellent | excellent | not observed | poor | not observed |
| | W14 | unstable | large | excellent | excellent | not observed | excellent | not observed | excellent | excellent | observed | excellent | not observed |
| | W15 | rough | large | poor | poor | observed | poor | not observed | poor | poor | observed | poor | not observed |
| | W16 | unstable | large | excellent | excellent | observed | excellent | not observed | excellent | excellent | observed | excellent | not observed |
| | W17 | thin | small | poor | excellent | observed | excellent | not observed | poor | excellent | observed | excellent | not observed |

**[Table 4]**

| section | wire symbol | welding workability | | | | | | | | | weld metal | | | total evaluation |
|---|---|---|---|---|---|---|---|---|---|---|---|---|---|---|
| | | vertical downward | | | | | horizontal fillet | | | | occurrence of high temperature cracking in first layer pass | tensile strength (N/mm²) | absorption energy vE-30 (J) | |
| | | slag removability | slag encapsulation | occurrence of metal-sagging | bead shape and appearance | presence of welding defect | slag removability | slag encapsulation | bead shape and appearance | presence of welding defect | | | | |
| Example of present invention | W1 | excellent | excellent | not observed | excellent | not observed | excellent | excellent | excellent | not observed | not observed | 500 | 55 | ○ |
| | W2 | excellent | excellent | not observed | excellent | not observed | excellent | excellent | excellent | not observed | not observed | 520 | 62 | ○ |
| | W3 | excellent | excellent | not observed | excellent | not observed | excellent | excellent | excellent | not observed | not observed | 522 | 68 | ○ |
| | W4 | excellent | excellent | not observed | excellent | not observed | excellent | excellent | excellent | not observed | not observed | 498 | 53 | ○ |
| | W5 | excellent | excellent | not observed | excellent | not observed | excellent | excellent | excellent | not observed | not observed | 548 | 81 | ○ |
| | W6 | excellent | excellent | not observed | excellent | not observed | excellent | excellent | excellent | not observed | not observed | 590 | 80 | ○ |
| | W7 | excellent | excellent | not observed | excellent | not observed | excellent | excellent | excellent | not observed | not observed | 557 | 68 | ○ |
| | W8 | excellent | excellent | not observed | excellent | not observed | excellent | excellent | excellent | not observed | not observed | 530 | 71 | ○ |
| | W9 | excellent | excellent | not observed | excellent | not observed | excellent | excellent | excellent | not observed | not observed | 574 | 69 | ○ |
| Comparative Example | W10 | poor | poor | not observed | poor | not observed | poor | poor | poor | not observed | not observed | 482 | 30 | × |
| | W11 | excellent | excellent | not observed | excellent | not observed | excellent | excellent | excellent | not observed | not observed | 677 | 30 | × |
| | W12 | poor | excellent | observed | excellent | not observed | excellent | excellent | excellent | not observed | observed | 519 | 30 | × |
| | W13 | excellent | excellent | not observed | excellent | slag inclusion | excellent | excellent | excellent | slag inclusion | not observed | 691 | 31 | × |
| | W14 | excellent | excellent | observed | excellent | not observed | excellent | excellent | poor | not observed | not observed | 672 | 27 | × |
| | W15 | poor | poor | not observed | poor | not observed | poor | poor | poor | not observed | not observed | 632 | 27 | × |
| | W16 | excellent | excellent | observed | excellent | not observed | excellent | excellent | excellent | not observed | observed | 680 | 34 | × |
| | W17 | poor | excellent | not observed | excellent | not observed | poor | excellent | excellent | not observed | not observed | 562 | 32 | × |

in Tables 1, 3, and 4, wire symbols W1 to W9 indicate Examples, and wire symbols W10 to W17 indicate Comparative Examples. In the wire symbols W1 to W9 in Examples, each component composition was within a range specified by the present invention. Therefore, welding workability was excellent in vertical upward welding in the straight technique or the weave technique, and welding workability was also excellent in vertical downward welding and horizontal fillet welding. The tensile strength and the absorption energy in the weld joint test were also excellent. That is, satisfactory results were obtained.

In each of the wire symbols W1, W2, W4, W7, and W8, a proper amount of Bi was added to the flux-cored wire, and therefore the slag removability was better, and extremely satisfactory results were obtained.

In Comparative Examples, the wire symbol W10 had a small amount of C, and therefore the tensile strength of a weld metal was low. The wire symbol W10 had a large amount of Si, and therefore the absorption energy of the weld metal was low. The wire symbol W10 had a small amount of Si oxide in terms of SiO₂, and therefore the slag encapsulation, the slag removability, and the bead shape and appearance were poor in all-position welding.

The wire symbol W11 had a large amount of C, and therefore the tensile strength of a weld metal was high. The wire symbol W11 had a small amount of Mn, and therefore the absorption energy of the weld metal was low. The wire symbol W11 had a large total amount of Al in terms of Al₂O₃ and Al₂O₃, and therefore the generation amount of spatter was large in all-position welding.

The wire symbol W12 had a small amount of Si, and therefore the absorption energy of a weld metal was low. The wire symbol W12 had a small amount of Ti oxide in terms of TiO₂, and therefore metal-sagging occurred and the bead shape and appearance were poor in vertical upward welding in the straight technique or the weave technique. Metal-sagging occurred and the slag removability was poor in vertical downward welding. The wire symbol W12 had a large amount of Bi, and therefore high temperature cracking occurred during welding of a first layer pass in the weld joint test.

The wire symbol W13 had a large amount of Mn, and therefore the tensile strength of a weld metal was high. The wire symbol W13 had a small total amount of Al in terms of Al₂O₃ and Al₂O₃, and therefore the bead shape and appearance were poor in vertical upward welding in the straight technique or the weave technique. The wire symbol W13 had a small amount of Al, and therefore the absorption energy of the weld metal was low. The wire symbol W13 had a large amount of Ti oxide in terms of TiO₂, and therefore slag inclusion occurred in vertical downward welding and horizontal fillet welding.

The wire symbol W14 had a large amount of Al, and therefore the tensile strength of a weld metal was high. The wire symbol W14 had a small amount of Zr oxide in terms of ZrO₂, and therefore metal-sagging occurred in vertical upward welding and vertical downward welding in the weave technique. The bead shape and appearance were poor in horizontal fillet welding. The wire symbol W14 had a small amount of Mg, and therefore the absorption energy of the weld metal was low. The wire symbol W14 had a small amount of K compound in terms of K₂O, and therefore the arc was unstable and the generation amount of spatter was large in all-position welding.

The wire symbol W15 had a small amount of Ni, and therefore the absorption energy of a weld metal was low. The wire symbol W15 had a large amount of Mg, and therefore the arc was rough and the generation amount of spatter was large in all-position welding, and metal-sagging occurred in vertical upward welding in the straight technique or the weave technique. The wire symbol W15 had a large amount of K compound in terms of K₂O, and therefore the slag encapsulation, the slag removability, and the bead shape and appearance were poor in all-position welding.

The wire symbol W16 had a large amount of Ni, and therefore the tensile strength of a weld metal was high. The wire symbol W16 had a large amount of B, and therefore high temperature cracking occurred during welding of a first layer pass in the weld joint test. The wire symbol W16 had a large amount of Si oxide in terms of SiO₂, and therefore metal-sagging occurred in vertical, upward welding and vertical downward welding in the straight technique or the weave technique. The absorption energy of the weld metal was low. The wire symbol W16 had a small amount of Na compound in terms of Na₂O, and therefore the arc was unstable and the generation amount of spatter was large in all-position welding.

The wire symbol W17 had a small amount of B, and therefore the absorption energy of a weld metal was low. The wire symbol W17 had a large amount of Zr oxide in terms of ZrO₂, and therefore the slag removability was poor in all-position welding. The wire symbol W17 had a large amount of Na compound in terms of Na₂O, and therefore the arc was concentrated excessively, and therefore metal-sagging occurred in vertical upward welding in the straight technique or the weave technique.

## Claims

1. A flux-cored wire for gas-shielded arc welding having a steel sheath filled with a flux,
comprising: in mass% with respect to the total mass of the wire, in the total of the flux and the steel sheath,
0.04 to 0.12% of C;
0.3 to 0.8% of Si;
1.5 to 3.0% of Mn;
0.2 to 1% of Ni;
0.8 to 1.4% of Al in terms of Al₂O₃ and Al₂O₃ in total and 0.3 to 0.6% of Al; and
0.004 to 0.012% of B, and
further comprising: in mass% with respect to the total mass of the wire, in the flux,
5.0 to 7.0% of Ti oxide in terms of TiO₂ in total;
0.2 to 0.6% of Si oxide in terms of SiO₂ in total;
0.4 to 0.7% of Zr oxide in terms of ZrO₂ in total;
0.1 to 0.5% of Mg;
0.02 to 0.1% of Na compound in terms of Na₂O in total; and
0.04 to 0.1% of K compound in terms of K₂O in total, the balance being Fe in the steel sheath, Fe in iron powder and iron alloy powder, and inevitable impurities.

2. The flux-cored wire for gas-shielded arc welding according to claim 1, further comprising, in mass% with respect to the total mass of the wire, in the flux, 0.03% or less of Bi.
